# EUROPEAN PATENT SPECIFICATION

(11) **EP 2 645 792 B1**
(45) Date of publication and mention of the grant of the patent: **25.11.2020**
(21) Application number: 13161646.8
(22) Date of filing: 28.03.2013
(51) Int. Cl.: H04W 56/00, H04W 74/08

(54) **Method of random access response reception**
Verfahren zum Empfangen einer Direktzugriffsreaktion
Procédé de réception de réponse d'accès aléatoire

(30) Priority: 30.03.2012 US 201261617681 P; 09.05.2012 US 201261644454 P; 27.03.2013 US 201313851944
(43) Date of publication of application: 02.10.2013
(73) Proprietor: Acer Incorporated, New Taipei City 221 (TW)
(72) Inventor: Ye, Shiang-Rung, New Taipei City 221 (TW)
(74) Representative: Straus, Alexander

(56) References cited:
- WO-A2-2011/122904
- CMCC: "DL and UL linking in CA", 3GPP DRAFT; R2-102423 DL AND UL LINKING IN CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 6 April 2010 (2010-04-06), XP050422675, [retrieved on 2010-04-06]

## Description

### Field of the Invention

The application relates to a method utilized in a wireless communication system, and more particularly, to a method of random access response reception in a wireless communication system.

### Background of the Invention

Toward advanced high-speed wireless communication system, such as transmitting data in a higher peak data rate, LTE-Advanced system is standardized by the 3rd Generation Partnership Project (3GPP) as an enhancement of LTE system. LTE-Advanced system targets faster switching between power states, improves performance at the cell edge, and includes subjects, such as bandwidth extension, coordinated multipoint transmission/reception (COMP), uplink multiple input multiple output (MIMO), etc.

For bandwidth extension, carrier aggregation is introduced to the LTE-Advanced system for extension to wider bandwidth, where two or more component carriers are aggregated, for supporting wider transmission bandwidths (for example up to 100MHz) and for spectrum aggregation. According to carrier aggregation capability, multiple component carriers are aggregated into overall wider bandwidth, where the UE can establish multiple links corresponding to the multiple component carriers for simultaneously receiving and/or transmitting. In carrier aggregation, the UE only has one RRC connection with the network. At RRC connection establishment/re-establishment/handover, one serving cell provides the NAS mobility information, and the security input. This cell is referred to as a primary cell (PCell). In the downlink, the component carrier corresponding to the PCell is the Downlink Primary Component Carrier (DL PCC) while in the uplink it is the Uplink Primary Component Carrier (UL PCC). In addition, cells other than the PCell are named secondary cell (SCell).

According to the specification of the LTE-Advanced system, a UE performs a random access procedure for synchronizing with a serving base station on uplink timing, to prevent, signals transmitted from the UE from colliding with those sent from other UEs under the coverage of the base station. For a non-contention random access procedure, the network assigns a dedicated preamble to the UE for triggering the random access procedure, and thereby the UE transmits the dedicated preamble to the network. After the network receives the dedicated preamble from the UE, the network transmits a random access response (RAR) including timing advance command for uplink synchronization to the UE. Note that, according to the agreement on LTE-Advance system specification, the UE may transmit the preamble on a SCell, but receives the RAR from the network on a PCell. In addition, the UE shall receive the RAR during a RAR window. If the UE does not receive the RAR during the RAR window, the random access procedure is considered a failure. Moreover, the network uses a medium access control protocol data unit (MAC PDU) to transmit the RAR to the UE. The UE decodes the MAC PDU by a random access radio network temporary identifier (RA-RNTI) which is calculated by the UE and network according to a subframe where the preamble is transmitted.

However, the applicant notices problems associated to RAR collision. In detail, if two UEs transmit the same dedicated preambles respectively to the network for the non contention random access procedure at the same time, the two UEs derive the same RA-RNTI. As abovementioned, the RAR is transmitted only on a PCell. If the two UEs have the same PCell, both UEs decode the RAR at the PCell, and thereby causing RAR collision. One UE may not successfully perform uplink synchronization since timing advance command of the RAR is accurate only for one of the UEs.

Take an example based on the abovementioned concept. A UE1 is assigned with a dedicated preamble for transmission on a SCell A. In addition, a UE2 is assigned with the same dedicated preamble on a PCell A or a SCell B, where a PCell of the UE1 and the PCell A of UE2 are the same cell. The UE1 transmits the dedicated preamble to the network on the SCell A and meanwhile the UE2 transmits the dedicated preamble to the network on the PCell A or the SCell B. In this situation, the UE1 and UE2 derive the same RA-RNTI and thereby both decode the RAR transmitted by the network on the PCell A, which causes a RAR collision. Since the UE1 and UE2 do not know the RAR is for itself or not, the UE1 and UE2 may both apply the timing advance command and/or the uplink grant in the RAR. This may cause data transmission failure on either the UE1 or UE2 or only one UE can be uplink synchronized with the network since the timing advance command and/or the uplink grant is accurate only for the UE1 or UE2. example is disclosed in CMCC: "DL and UL linking in CA",3GPP DRAFT; R2-102423 DL AND UL LINKING IN CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, china; 20100412, 6 April 2010 (2010-04-06).

### Summary of the Invention

This in mind, the application aims at providing a method of random access response reception in a wireless communication system, in order to solve the abovementioned problems.

This is achieved by a method of providing a method of random access response reception according to appended independent claims. The dependent claims pertain to corresponding further developments and improvements.

As will be seen more clearly from the detailed description following below, the claimed method of random access response reception for a network in a wireless communication system comprises assigning a first preamble for a non contention random access procedure to a first mobile device of the wireless communication system, and configuring a first set of subframes of a random access response window to the first mobile device to receive a first random access response corresponding to the first preamble according to the first set of subframes of the random access response window, wherein the random access response window includes subframes for reception of a random access response.

### Brief Description of the Drawings

Fig. 1 illustrates a schematic diagram of an exemplary wireless communication system.
Fig. 2 illustrates a schematic diagram of an exemplary communication device.
Figs. 3-5 are flowcharts of exemplary processes.

### Detailed Description

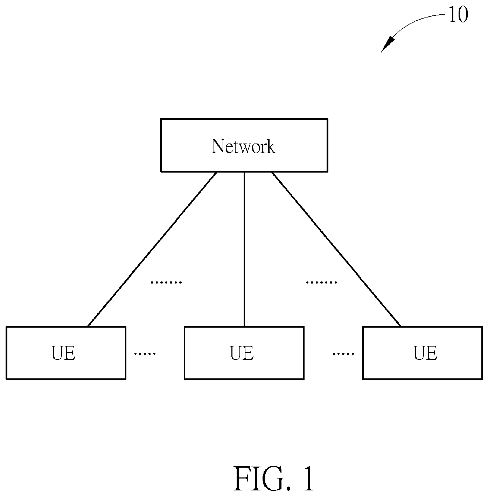

Please refer to Fig. 1, which is a schematic diagram of a wireless communication system 10. The wireless communication system 10 can be referred as a Universal Mobile Telecommunications System (UMTS), Long-Term Evolution (LTE) system, a Long-Term Evolution advanced (LTE-A) system or other mobile communication systems, and is briefly composed of a network and a plurality of user equipments (UEs). In Fig. 1, the network and the UEs are simply utilized for illustrating the structure of the wireless communication system 10. In the LTE or LTE-A system, the network may be an evolved universal terrestrial radio access network (E-UTRAN) comprising a plurality of evolved base stations (eNBs). On the other hand, in the UMTS, the network can be referred as a Universal Terrestrial Radio Access Network (UTRAN). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

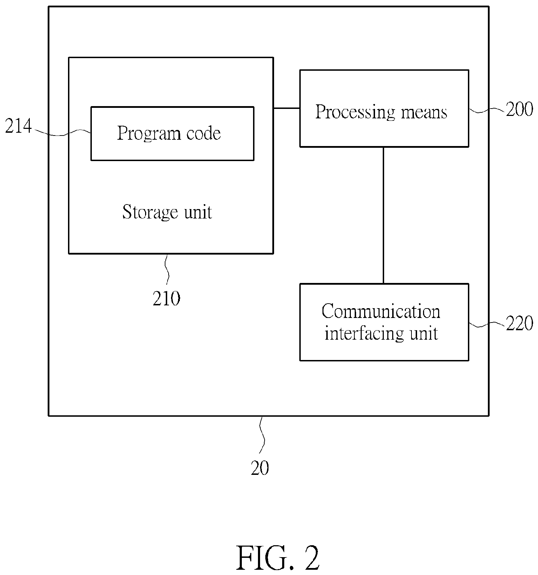

Fig. 2 illustrates a schematic diagram of an exemplary communication device 20. The communication device 20 can be the UE or the network shown in Fig. 1. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

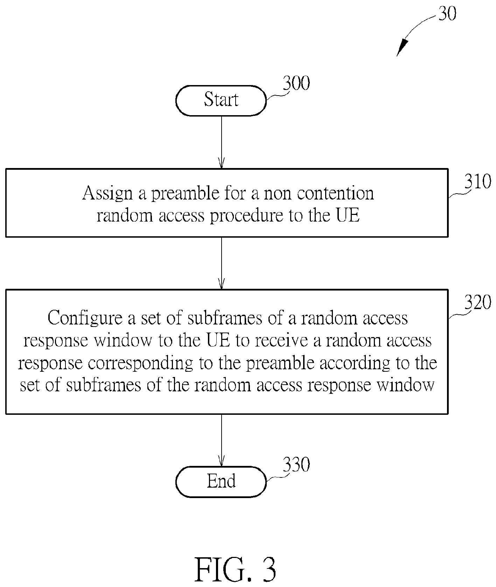

Please refer to Fig. 3, which illustrates a flowchart of an exemplary process 30. The process 30 is utilized in a network (i.e. an eNB) as shown in Fig. 1, for random access response (RAR) reception. The process 30 can be compiled into the program code 214 and includes the following steps:
Step 300: Start.
Step 310: Assign a preamble for a non contention random access procedure to the UE.
Step 320: Configure a set of subframes of a random access response window to the UE to receive a random access response corresponding to the preamble according to the set of subframes of the random access response window.
Step 330: End.

According to the process 30, the network configures a set of subframes of the random access response window, hereafter called RAR window, to the UE, and thereby the UE receives a RAR corresponding to the transmitted dedicated preamble only on the set of subframes of the RAR window instead of all subframes of the RAR window. The process 30 can be applied for a carrier aggregation system, such as a LTE-A system, or a non carrier aggregation system, such as a LTE system or a UMTS system, etc. Note that, in the LTE-A system, a RAR collision may be avoided if the UE follows the RAR reception time configured by the network.

In detail, the network assigns a first dedicated preamble to a UE1 and a second dedicated preamble to a UE2, wherein the UE1 and the UE2 have the same primary cell, and the first dedicated preamble and the second dedicated preamble are the same. The network further configures a first set of subframes of a random access response window to the UE1 and a second set of subframes of the random access response window to the UE2, wherein the first set of subframes is different to the second set of subframes of the random access response (namely the first set of subframes and the second set of subframes of the RAR window are not overlapping). Thus, the UE1 and UE2 with the same primary cell and the same dedicated preamble do not receive a RAR on the primary cell at the same time, and thereby do not decode the RAR on the primary cell at the same time. Therefore, with RAR reception time separation, the RAR collision can be avoided. Thus, the UEs do not apply inaccurate resources (i.e. timing advance command and/or uplink grant), which may cause uplink timing synchronization failure or transmission failure. The detailed description of problems associated to the RAR collision can be referred from above, so it is omitted herein.

Note that, the network may explicitly configure the RAR reception time to the UE. For example, the network configures a set of subframes of a RAR window to the UE via a RRC, MAC, or PHY layer signaling. Alternatively, the network may implicitly configure the RAR reception time to the UE. For example, a rule is predefined in the network and the UE. The UE derives a set of subframes of a RAR window according to the rule. Or, an identity of a SCell is used for deriving the set of subframe of the RAR. For example, the UE receives the RAR only on subframe n according to the identity n of the SCell, which is used for transmission of the dedicated preamble.

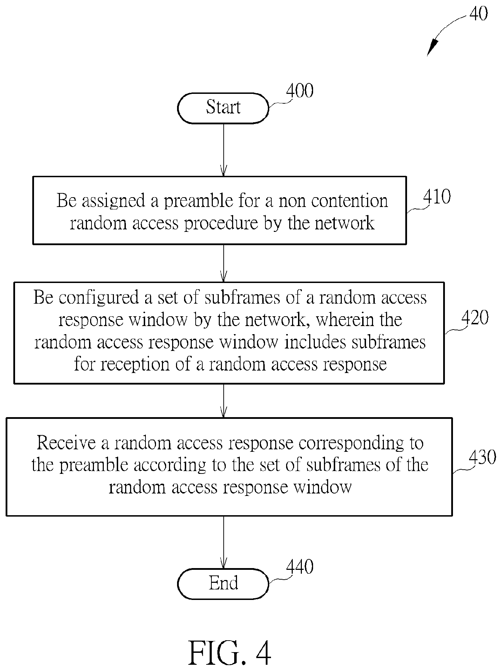

Please refer to Fig. 4, which illustrates a flowchart of an exemplary process 40. The process 40 is utilized in a UE as shown in Fig. 1, for random access response (RAR) reception. The process 40 can be compiled into the program code 214 and includes the following steps:
Step 400: Start.
Step 410: Be assigned a preamble for a non contention random access procedure by the network.
Step 420: Be configured a set of subframes of a random access response window by the network, wherein the random access response window includes subframes for reception of a random access response.
Step 430: Receive a random access response corresponding to the preamble according to the set of subframes of the random access response window.
Step 440: End.

According to the process 40, the UE receives the RAR corresponding to the transmitted dedicated preamble only on the set of subframes of the RAR window configured by the network, instead of all subframes of the RAR window. Thus, the RAR collision may be avoided. The detailed description can be referred from above, so it is not given herein.

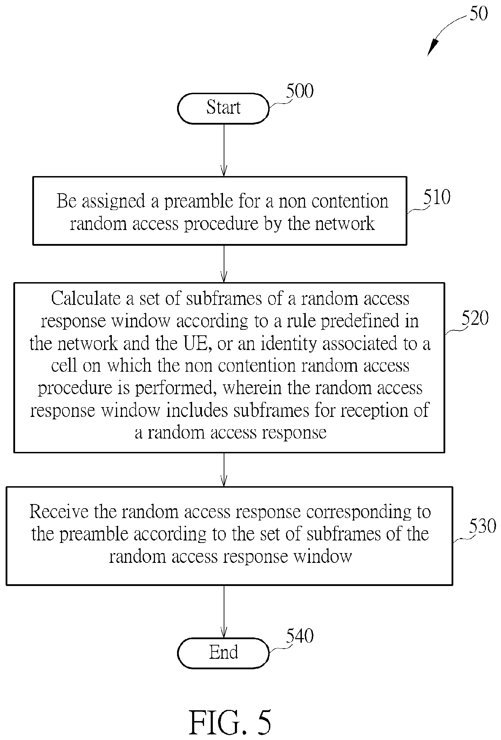

Please refer to Fig. 5, which illustrates a flowchart of an exemplary process 50. The process 50 is utilized in a UE as shown in Fig. 1, for random access response (RAR) reception. The process 50 can be compiled into the program code 214 and includes the following steps:
Step 500: Start.
Step 510: Be assigned a preamble for a non contention random access procedure by the network.
Step 520: Calculate a set of subframes of a random access response window according to a rule predefined in the network and the UE, or an identity associated to a cell on which the non contention random access procedure is performed, wherein the random access response window includes subframes for reception of a random access response.
Step 530: Receive the random access response corresponding to the preamble according to the set of subframes of the random access response window
Step 540: End.

According to the process 50, the UE receives the RAR corresponding to the transmitted dedicated preamble only on the set of subframes of the RAR window calculated by itself, instead of all subframes of the RAR window. Thus, the RAR collision may be avoided. The detailed description can be referred from above, so it is not given herein. Note that, unlike the process 40, the process 50 specifies that the UE calculates the set of subframes of the RAR window for RAR reception without network configuration.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention provides methods for the network and the UE for RAR reception, so as to prevent RAR collision and resource waste.

## Claims

1. A method of random access response reception for a network in a wireless communication system comprising:
assigning a first preamble for a non contention random access procedure to a first mobile device of the wireless communication system (310);
configuring a first set of subframes of a random access response window to the first mobile device to receive a first random access response corresponding to the first preamble according to the first set of subframes of the random access response window, wherein the random access response window includes subframes for reception of a random access response (320);
assigning a second preamble for the non contention random access procedure to a second mobile device of the wireless communication system, wherein the second mobile device and the first mobile device have the same primary cell and the second preamble is the same as the first preamble; and
configuring a second set of subframes of the random access response window to the second mobile device to receive a second random access response corresponding to the second preamble according to the second set of subframes, wherein the second set of subframes of the random access response window is different from the first set of subframes of the random access response window.

2. The method of claim 1, **characterized in that** configuring the first set of subframes of the random access response window to the first mobile device to receive the first random access response corresponding to the first preamble according to the first set of subframes of the random access response window comprises:
configuring the first set of subframes of the random access response window to the first mobile device according to a rule predefined in the network and the first mobile device, or an identity associated to a cell on which the non contention random access procedure is performed; or
configuring the first set of subframes of the random access response window to the first mobile device with a radio resource control (RRC), medium access control (MAC), physical (PHY) layer signalling.

3. A method of random access response reception for a mobile device in a wireless communication system comprising:
being assigned a preamble for a non contention random access procedure by a network of the wireless communication system (510);
calculating a set of subframes of a random access response window according to a rule predefined in the network and the mobile device, or according to an identity associated to a cell on which the non contention random access procedure is performed, wherein the random access response window includes subframes for reception of a random access response (520); and
receiving the random access response corresponding to the preamble according to the set of subframes of the random access response window (530).

## Patentansprüche

1. Verfahren zum randomisierten Zugangs-Antwort-Empfang für ein Netzwerk in einem Drahtlos-Kommunikationssystem, welches umfasst:
Zuweisen einer ersten Präambel für einen unstrittigen randomisierten Zugangs-Vorgang an ein erstes Mobilgerät des Drahtlos-Kommunikationssystems (310);
Konfigurieren eines erstes Satzes Unterrahmen eines randomisierten Zugangs-Antwort-Fensters an das erste Mobilgerät, um eine erste randomisierte Zugangs-Antwort gemäß der ersten Präambel entsprechend dem ersten Satz Unterrahmen des randomisierten Zugangs-Antwort-Fensters zu erhalten, wobei das randomisierte Zugangs-Antwort-Fenster Unterrahmen zum Empfang einer randomisierten Zugangs-Antwort (320) umfasst;
Zuweisen einer zweiten Präambel für den unstrittigen randomisierten Zugangs-Vorgang an ein zweites Mobilgerät des Drahtlos-Kommunikationssystems, worin das zweite Mobilgerät und das erste Mobilgerät die gleiche Primärzelle aufweisen und die zweite Präambel die gleiche ist wie die erste Präambel; und
Konfigurieren eines zweiten Satzes Unterrahmen des randomisierten Zugangs-Antwort-Fensters an das zweite Mobilgerät, um ein zweite randomisierte Zugangs-Antwort gemäß der zweiten Präambel entsprechend dem zweiten Satz Unterrahmen zu erhalten, worin der zweite Satz Unterrahmen des randomisierten Zugangs-Antwort-Fensters verschieden ist von dem ersten Satz Unterrahmen des randomisierten Zugangs-Antwort-Fensters.

2. Verfahren nach Anspruch 1, **dadurch gekennzeichnet, dass** Konfigurieren des ersten Satzes Unterrahmen des randomisierten Zugangs-Antwort-Fensters an das erste Mobilgerät, um die erste randomisierte Zugangs-Antwort gemäß der ersten Präambel entsprechend dem ersten Satz Unterrahmen des randomisierten Zugangs-Antwort-Fensters zu erhalten, umfasst:
Konfigurieren des Satzes Unterrahmen des randomisierten Zugangs-Antwort-Fensters an das erste Mobilgerät gemäß einer in dem Netzwerk und dem ersten Mobilgerät vordefinierten Regel, oder einer mit einer Zelle verbundenen Identität, auf der der unstrittige randomisierte Zugangs-Vorgang durchgeführt wird; oder
Konfigurieren des Satzes Unterrahmen des randomisierten Zugangs-Antwort-Fensters an das erste Mobilgerät mit einer Funkquellensteuerung (RRC), einer Medienzugriffssteuerung (MAC), oder einer physischen (PHY) Schicht-Signalgebung.

3. Verfahren zum randomisierten Zugangs-Antwort-Empfang für ein Mobilgerät in einem Drahtlos-Kommunikationssystem, welches umfasst:
zugewiesen werden einer Präambel für einen unstrittigen randomisierten Zugangs-Vorgang durch ein Netzwerk des Drahtlos-Kommunikationssystems (510);
Berechnen eines Satzes Unterrahmen eines randomisierten Zugangs-Antwort-Fensters gemäß einer in dem Netzwerk und dem Mobilgerät vorbestimmten Regel, oder gemäß einer mit einer Zelle verbundenen Identität, auf welcher der unstrittige randomisierte Zugangs-Vorgang durchgeführt wird, worin das randomisierte Zugangs-Antwort-Fenster Unterrahmen zum Empfang einer randomisierten Zugangs-Antwort (520) umfasst; und
Empfangen der randomisierten Zugangs-Antwort gemäß der Präambel entsprechend dem Satz Unterrahmen des randomisierten Zugangs-Antwort-Fensters (530).

## Revendications

1. Procédé de réception de réponse d'accès aléatoire pour un réseau dans un système de communication sans fil comprenant :
l'attribution d'un premier préambule pour une procédure d'accès aléatoire sans conflit à un premier dispositif mobile du système de communication sans fil (310) ;
la configuration d'un premier ensemble de sous-trames d'une fenêtre de réponse d'accès aléatoire au premier dispositif mobile pour recevoir une première réponse d'accès aléatoire correspondant au premier préambule selon le premier ensemble de sous-trames de la fenêtre de réponse d'accès aléatoire, la fenêtre de réponse d'accès aléatoire comprenant des sous-trames pour la réception d'une réponse d'accès aléatoire (320) ;
l'attribution d'un deuxième préambule pour la procédure d'accès aléatoire sans conflit à un deuxième dispositif mobile du système de communication sans fil, le deuxième dispositif mobile et le premier dispositif mobile présentant la même cellule primaire et le deuxième préambule étant le même que le premier préambule ; et
la configuration d'un deuxième ensemble de sous-trames de la fenêtre de réponse d'accès aléatoire au deuxième dispositif mobile pour recevoir une deuxième réponse d'accès aléatoire correspondant au deuxième préambule selon le deuxième ensemble de sous-trames, le deuxième ensemble de sous-trames de la fenêtre de réponse d'accès aléatoire étant différent du premier ensemble de sous-trames de la fenêtre de réponse d'accès aléatoire.

2. Procédé selon la revendication 1, **caractérisé en ce que** la configuration du premier ensemble de sous-trames de la fenêtre de réponse d'accès aléatoire au premier dispositif mobile pour recevoir la première réponse d'accès aléatoire correspondant au premier préambule selon le premier ensemble de sous-trames de la fenêtre de réponse d'accès aléatoire comprend :
la configuration du premier ensemble de sous-trames de la fenêtre de réponse d'accès aléatoire au premier dispositif mobile selon une règle prédéfinie dans le réseau et dans le premier dispositif mobile ou selon une identité associée à une cellule sur laquelle la procédure d'accès aléatoire sans conflit est effectuée ; ou
la configuration du premier ensemble de sous-trames de la fenêtre de réponse d'accès aléatoire au premier dispositif mobile avec une commande de ressources radio (RRC), une commande d'accès au support (MAC), une signalisation de couche physique (PHY).

3. Procédé de réception de réponse d'accès aléatoire pour un dispositif mobile dans un système de communication sans fil comprenant :
l'attribution d'un préambule pour une procédure d'accès aléatoire sans conflit par un réseau du système de communication sans fil (510) ;
le calcul d'un ensemble de sous-trames d'une fenêtre de réponse d'accès aléatoire selon une règle prédéfinie dans le réseau et dans le dispositif mobile ou selon une identité associée à une cellule sur laquelle la procédure d'accès aléatoire sans conflit est effectuée, la fenêtre de réponse d'accès aléatoire comprenant des sous-trames pour la réception d'une réponse d'accès aléatoire (520) ; et
la réception de la réponse d'accès aléatoire correspondant au préambule selon l'ensemble de sous-trames de la fenêtre de réponse d'accès aléatoire (530).
